# DEMANDE DE BREVET EUROPEEN

(11) **EP 0 998 843 A1**
(43) Date de publication de la demande: **10.05.2000**
(21) Numéro de dépôt: 99440289.9
(22) Date de dépôt: 29.10.1999
(51) Int. Cl.: A01D 78/10

(54) **Machine de fenaison**

(30) Priorité: 02.11.1998 FR 9813905
(71) Demandeur: KUHN S.A., F-67706 Saverne Cedex (FR)
(72) Inventeur: Quirin Michel, 67310 Allenwiller (FR); Helfer, Marc, 67700 Ottersthal (FR)
(74) Mandataire: Andres, Jean-Claude

(57) **Abrégé**

La présente invention se rapporte à une machine de fenaison avec un bâti (1) se composant d'une poutre de traction (25) avec un premier rotor d'andainage (2) et d'une poutre de liaison (17) avec au moins un deuxième rotor d'andainage (3).

Elle est remarquable en ce qu'entre la poutre de traction (25) et la poutre de liaison (17) est monté un dispositif de stabilisation (36) avec des moyens (37) de blocage et de déblocage automatiques de la poutre de liaison (17) et du deuxième rotor (3) dans au moins une position de travail.

## Description

La présente invention se rapporte à une machine de fenaison, notamment une andaineuse de végétaux coupés, comportant un bâti portant au moins deux rotors d'andainage qui sont entraînés en rotation durant le travail autour d'axes supports sensiblement verticaux qui sont munis de roues porteuses, lequel bâti se compose d'une poutre de traction avec un premier rotor d'andainage et d'une poutre de liaison avec au moins un deuxième rotor d'andainage, cette poutre de liaison étant articulée par rapport à la poutre de traction au moyen d'au moins un axe sensiblement vertical autour duquel elle peut être déplacée dans plusieurs positions.

Sur une machine de ce genre, le maintien de la poutre de liaison et du deuxième rotor dans la position de travail est réalisé avec un vérin hydraulique et un ressort de traction. Ces moyens n'assurent cependant pas un positionnement exact de ladite poutre et dudit rotor. Ce dernier peut se déplacer dans la direction de traction du ressort ou dans la direction opposée notamment en fonction du volume du fourrage à andainer ou du relief du terrain. Dans les montées ou lorsqu'il y a beaucoup de fourrage le deuxième rotor peut pivoter vers l'arrière, ce qui réduit la largeur de travail. Inversement, dans les descentes ou lorsqu'il y a peu de fourrage ce deuxième rotor peut pivoter vers l'avant. Il s'éloigne alors latéralement du premier rotor et ne coopère plus correctement avec celui-ci.

La présente invention a pour but de proposer une machine telle que décrite dans l'introduction et qui ne présente pas les inconvénients sus-cités.

A cet effet, une importante caractéristique de l'invention consiste en ce que entre la poutre de traction et la poutre de liaison est monté un dispositif de stabilisation avec des moyens de blocage et de déblocage automatiques de la poutre de liaison dans au moins une position de travail.

Cet agencement permet de déterminer avec précision la position de travail du deuxième rotor. Celui-ci assure alors un andainage très régulier. De plus, le dispositif selon l'invention arrête automatiquement la poutre de liaison et le second rotor lorsqu'ils arrivent dans la position de travail. Il libère également automatiquement ladite poutre de liaison et le second rotor en vue de permettre à ce dernier de se placer à l'arrière du premier rotor par exemple pour faire demi-tour ou pour le transport. Cette automaticité facilite considérablement le travail de l'utilisateur de la machine.

Selon d'autres caractéristiques de l'invention le dispositif de stabilisation se compose de deux lames coulissantes dont la première est reliée à la poutre de traction et la deuxième à la poutre de liaison et qui portent les moyens de blocage et de déblocage. Ces moyens sont constitués par un levier qui est articulé sur la première lame coulissante et qui comporte une surface plane et une encoche et par un tenon solidaire de la deuxième lame coulissante et pouvant se loger dans ladite encoche. Le levier de la première lame coulissante est soumis à la pression d'au moins un ressort de manière à être poussé vers le tenon de la deuxième lame coulissante.

D'autres caractéristiques et avantages de l'invention ressortiront des revendications et de la description ci-après d'un exemple de réalisation non limitatif de l'invention, avec références aux dessins annexés dans lesquels :
- la figure 1 représente une vue de dessus simplifiée d'une machine selon l'invention en position de travail,
- la figure 2 représente une vue de dessus simplifiée de la machine selon l'invention en position de transport,
- la figure 3 représente, à plus grande échelle, une vue de côté de l'avant de la machine en position de travail,
- la figure 4 représente, à une plus grande échelle, une vue de côté de l'avant de la machine en position de transport,
- la figure 5 représente une vue de détail en coupe du dispositif de stabilisation selon l'invention.

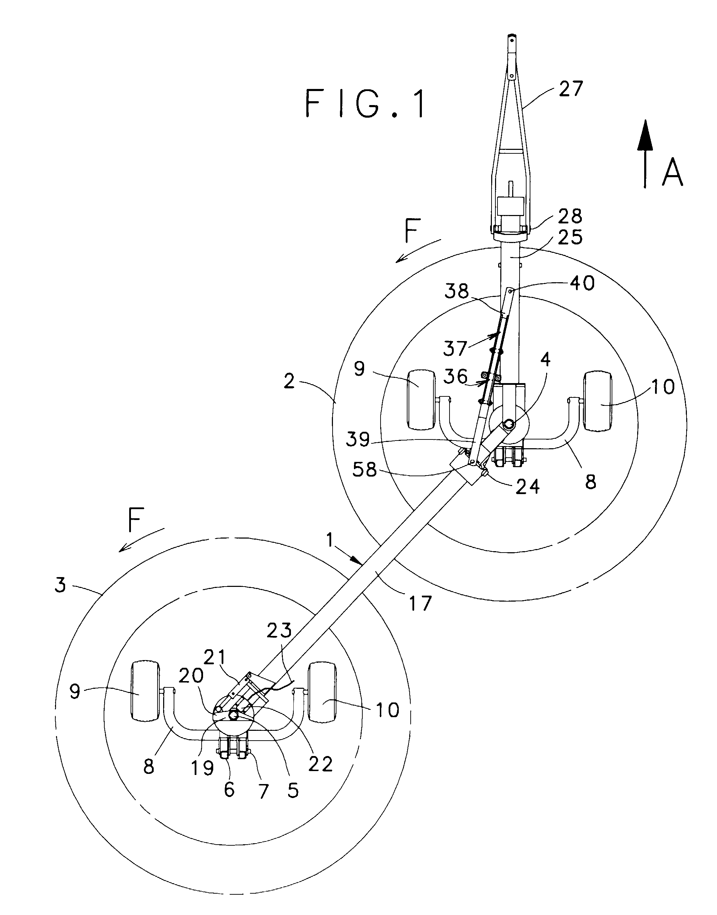

Telle qu'elle est représentée sur les figures 1 à 4, la machine selon l'invention comporte un bâti (1) pouvant être accroché à un tracteur servant à animer et à déplacer la machine dans une direction d'avancement (A). Ce bâti (1) porte deux rotors (2 et 3) d'andainage. Ces rotors (2 et 3) sont montés rotatifs sur des axes (4 et 5) sensiblement verticaux. Chacun de ces axes (4 et 5) porte à son extrémité inférieure un support (6) sur lequel est articulé, au moyen d'un axe (7), un cintre (8) qui est muni de deux roues porteuses (9 et 10). Entre chaque support (6) et des pattes (11) solidaires du cintre (8) correspondant est disposé un vérin hydraulique (12). Celui-ci permet de déplacer le cintre (8) autour de son axe d'articulation (7) en vue du réglage de la distance du rotor (2, 3) correspondant par rapport au sol.

Chaque rotor (2, 3) se compose essentiellement d'un carter central (13) qui est monté sur l'axe (4, 5) correspondant au moyen de roulements à billes. Ce carter central (13) porte plusieurs bras (14) qui s'étendent vers l'extérieur dans un plan pratiquement horizontal. Ces derniers sont munis à leurs extrémités les plus éloignées dudit carter (13) de fourches de râtelage (15). Ces bras (14) sont montés dans des paliers (16) dudit carter (13) de manière à pouvoir pivoter sur eux-mêmes, autour de leurs axes géométriques longitudinaux. Dans chaque carter central (13) se situe une came de commande qui est fixée sur l'axe (4, 5) correspondant. Chaque bras porte-fourches (14) possède, à son extrémité située à l'intérieur du carter (13), un galet qui coopère avec ladite came de commande.

Une poutre de liaison (17) relie l'axe sensiblement vertical (4) du premier rotor (2) à l'axe (5) du deuxième rotor (3). L'extrémité avant de cette poutre (17) est articulée sur l'axe (4), au moyen de deux paliers (18), de manière à pouvoir pivoter autour. Ceci permet de modifier la position de cette poutre de liaison (17) et du deuxième rotor (3) par rapport au premier rotor (2). L'extrémité arrière de la poutre de liaison (17) est articulée sur l'axe (5) du deuxième rotor (3). Elle comporte un palier dans lequel peut tourner ledit axe (5). L'extrémité supérieure de cet axe (5) porte un manchon (19) avec un bras (20) qui s'étend latéralement. Un vérin hydraulique (21) est articulé sur ledit bras (20) et sur la poutre de liaison (17). Ce vérin hydraulique (21) est avantageusement commandé depuis le tracteur. Il permet ainsi de faire tourner l'axe (5) sur lui-même dans le palier de la poutre (17). Ce palier comporte en sus un verrou (22) qui peut être actionné au moyen d'un câble (23) et qui permet de bloquer l'axe (5) au moins en position de transport. La poutre de liaison (17) est réalisée en deux parties articulées entre elles par un axe (24) sensiblement horizontal. Celui-ci permet auxdites parties et au rotor (2 ou 3) correspondant de se déplacer en hauteur les uns par rapport aux autres pour suivre les dénivellations du sol.

Une poutre de traction (25) est également fixée sur l'axe (4) sensiblement vertical du premier rotor (2) par l'intermédiaire d'un coude (26). Elle est immobilisée en rotation sur cet axe (4) à l'aide d'une clavette. Cette poutre de traction (25) s'étend horizontalement vers l'avant (vu dans la direction d'avancement (A)). Un timon (27) est articulé à son extrémité avant au moyen d'un axe (28). Celui-ci permet d'accrocher la machine au tracteur. La position de ce timon (27) par rapport à la poutre (25) est réglable au moyen d'un vérin hydraulique (29) et d'une manivelle (30). Ce vérin hydraulique (29) est lié à un arceau (31) solidaire du timon (27) et à un levier (32) qui est articulé sur la poutre de traction (25). La manivelle (30) est, d'une part, guidée de telle sorte qu'elle soit libre en rotation et immobile en translation dans un pivot (33) qui est articulé sur une chape (34) de la poutre de traction (25) et, d'autre part, vissée dans un trou fileté d'un second pivot (35) qui est articulé sur le levier (32).

Le vérin hydraulique (29) permet de modifier d'une manière importante la position relative entre le timon (27) et la poutre de traction (25) lors des changements de position de la machine, alors que la manivelle (30) permet d'effectuer des réglages plus précis. Ledit vérin hydraulique (29) peut avantageusement être raccordé aux tuyaux hydrauliques qui alimentent les vérins hydrauliques (12) qui sont situés sous les rotors (2 et 3) de sorte qu'ils agissent ensemble pour soulever et abaisser la machine.

Un dispositif de stabilisation (36) est monté ente la poutre de liaison (17) et la poutre de traction (25). Il se situe au-dessus de ces poutres (17 et 25) et de l'axe support (4) du premier rotor (2). Ce dispositif de stabilisation (36) comporte des moyens (37) de blocage et de déblocage automatiques de la poutre de liaison (17) et du deuxième rotor (3) dans au moins une position de travail. Il se compose de deux lames coulissantes (38 et 39) l'une par rapport à l'autre et qui portent lesdits moyens (37) de blocage et de déblocage. La première lame coulissante (38) est reliée à la poutre de traction (25) au moyen d'un axe (40) sensiblement vertical. Elle porte sur son côté supérieur un levier (41). Celui-ci est articulé au moyen d'un axe sensiblement horizontal (42) sur deux languettes verticales (43) solidaires de ladite première lame coulissante (38). Ces languettes (43) s'étendent également au-delà du côté inférieur de la première lame (38) et portent à une faible distance en dessous de celle-ci un deuxième axe (44).

Le levier (41) comporte une surface plane (45) et une encoche (46). Cette encoche (46) présente deux côtés (47 et 48) inclinés l'un vers l'autre à partir de ladite surface plane (45). Chacun de ces côtés inclinés (47 et 48) présente à partir de la surface plane (45) une première pente (49) et une deuxième pente (50) qui ont sensiblement la même longueur. Lesdites premières pentes (49) sont inclinées de telle sorte qu'elles forment entre elles un angle d'environ 90°. L'inclinaison des deuxièmes pentes (50) est telle qu'elles forment entre elles un angle d'environ 30°.

La première lame coulissante (38) porte en sus une patte transversale (51). Le levier (41) porte une patte (52) similaire à la patte (51) précitée. Ces pattes (51 et 52) se situent l'une en face de l'autre. Chacune possède sur chaque côté de la lame coulissante (38) et du levier (41) un orifice pour le passage d'une tige (53). Le montage comporte une tige (53) sur chacun desdits côtés. Chaque tige (53) s'étend à travers l'orifice de la première patte (51) et celui de la deuxième patte (52). Chacune de ces tiges (53) porte à ses deux extrémités des arrêts (54 et 55) tels que des écrous. Les parties de chaque tige (53) qui se situent entre les pattes (51 et 52) et les arrêts (54 et 55) comportent des ressorts de pression (56 et 57). De par leur pression, ces ressorts (56 et 57) poussent la patte (52) et le levier (41) vers la patte (51) et la première lame coulissante (38).

La deuxième lame coulissante (39) est reliée à la poutre de liaison (17) au moyen d'un axe sensiblement vertical (58). Cet axe (58) se situe sur un bras (59) solidaire de la poutre de liaison (17). Cette deuxième lame (39) est placée sous la première lame coulissante (38) et peut se déplacer longitudinalement par rapport à celle-ci. Elle est guidée par les deux languettes (43) et le deuxième axe (44).

Cette deuxième lame coulissante (39) comporte un tenon (60) qui peut se loger dans l'encoche (46) du levier (41). Ce tenon (60) est formé par deux languettes (61) dirigées vers le haut et un axe transversal (62). Ces languettes (61) sont fixées sur les côtés de la lame coulissante (39). L'axe transversal (62) se situe entre la première lame coulissante (38) et le levier (41). Il peut entrer dans l'encoche (46) dudit levier (41) et empêcher les lames (38 et 39) de coulisser l'une par rapport à l'autre. Les languettes (61) portent un deuxième axe (63) qui sert de guide à la première lame (38). Un renfort (64) en forme de barre est soudé sur le côté inférieur de la deuxième lame (39). Ce renfort évite des déformations vers le bas de cette lame (39) sous la pression exercée par le levier (41) et les ressorts (56 et 57).

La machine peut comporter des moyens hydrauliques ou mécaniques pour l'entraînement en rotation des rotors (2 et 3). Dans le cas d'un entraînement mécanique, celui-ci est assuré à partir de l'arbre de prise de force du tracteur. Le premier rotor (2) est entraîné au moyen d'un arbre de transmission qui est logé dans la poutre de traction (25) et qui peut être relié à l'arbre de prise de force avec un arbre à cardans intermédiaire. Le deuxième rotor (3) est entraîné depuis le premier rotor (2) au moyen d'un arbre de transmission qui est logé dans la poutre de liaison (17).

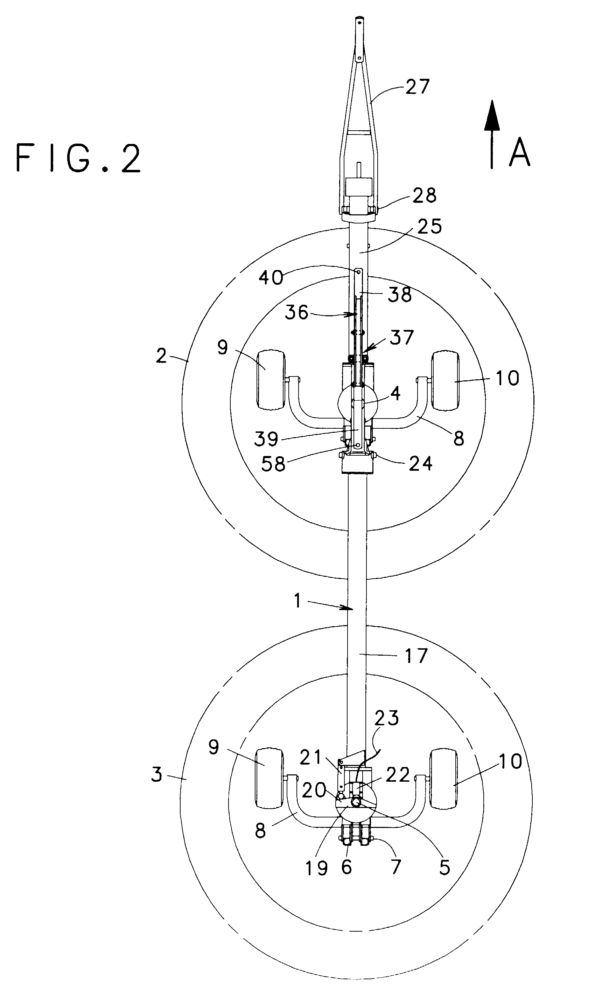

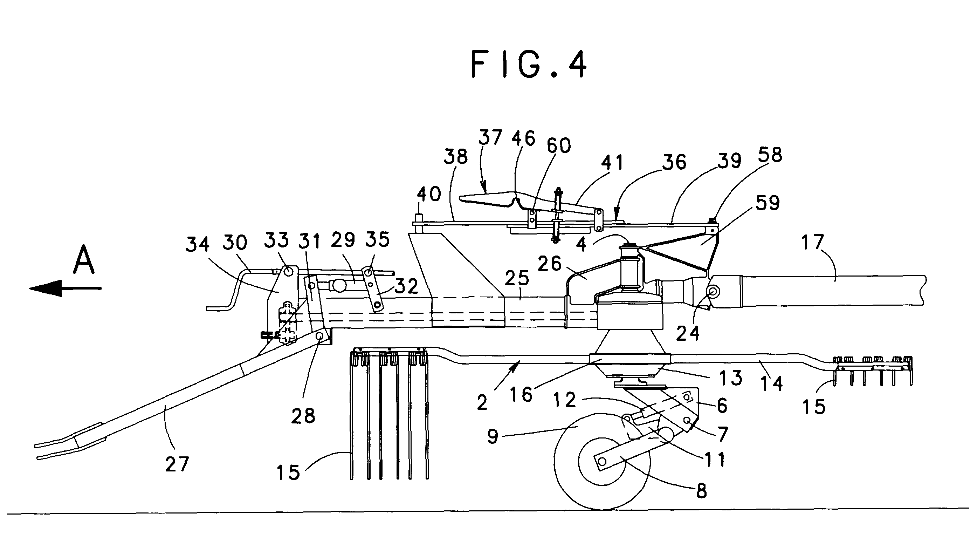

Dans la position de transport qui est représentée sur les figures 2 et 4 le deuxième rotor (3) se situe derrière le premier rotor (2) afin de réduire la largeur de l'ensemble. Les deux rotors (2 et 3) sont soulevés au moyen des vérins hydrauliques (12) pour éloigner leurs fourches (15) du sol. Simultanément le vérin hydraulique (29) est allongé de manière à garder la poutre de traction (25) sensiblement horizontale. Les roues (9 et 10) du deuxième rotor (3) sont amenées et sont bloquées dans une position dans laquelle elles sont sensiblement parallèles à la poutre de liaison (17) au moyen du vérin hydraulique (21) et du verrou (22) qui bloque l'axe sensiblement vertical (5) de ce rotor (3). Dans cette position, la poutre de liaison (17) et le deuxième rotor (3) peuvent pivoter librement autour de l'axe (4) sur lequel ils sont articulés. Ils suivent alors le premier rotor (2) à la manière d'une remorque. Les deux lames (38 et 39) du dispositif de stabilisation (36) sont débloquées et peuvent coulisser l'une par rapport à l'autre. Le tenon (60) se situe en dehors de l'encoche (46) du levier (41) et se déplace sur la partie plane (45) de ce dernier.

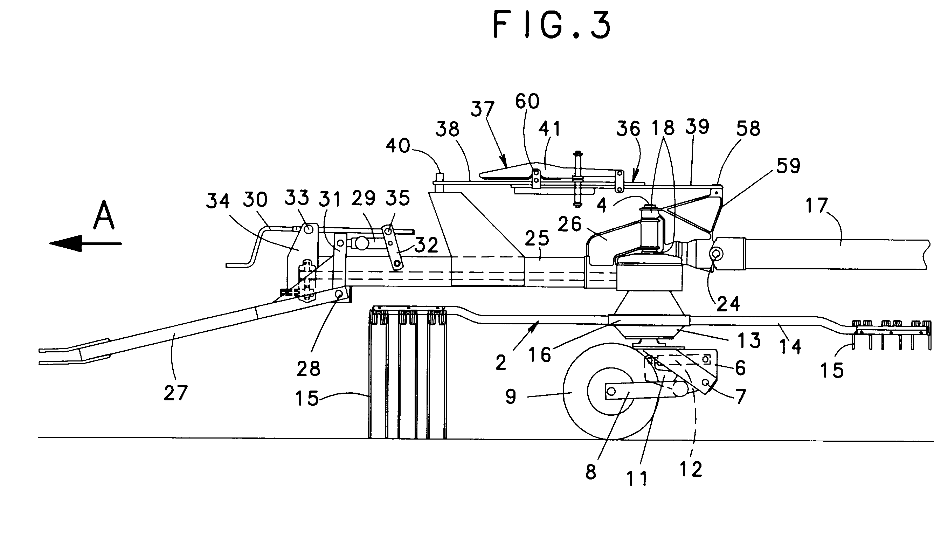

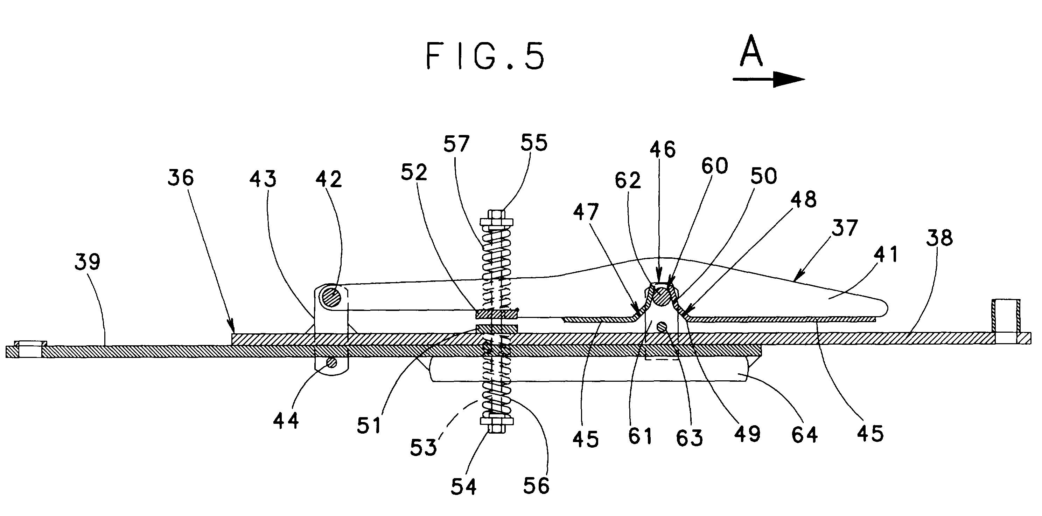

Pour mettre la machine dans la position de travail représentée sur les figures 1 et 3, l'opérateur déverrouille l'axe sensiblement vertical (5) du deuxième rotor (3). Il actionne ensuite le vérin hydraulique (21) pour qu'il s'allonge et fasse tourner le manchon (19), l'axe (5) et les roues (9 et 10) de telle sorte que ces dernières soient dirigées vers la gauche (vu dans le sens d'avancement (A)) et forment un angle avec la poutre de liaison (17). Dès que l'opérateur avance avec la machine, le deuxième rotor (3) tourne avec la poutre de liaison (17) autour de l'axe (4) du premier rotor (2) et se décale latéralement vers la gauche. Simultanément, les lames coulissantes (38 et 39) se rapprochent l'une de l'autre. L'axe (62) du tenon (60) arrive alors sur la première pente (49) de l'encoche (46) du levier (41). La pression des ressorts (56 et 57) sur le levier (41) contribue à ramener ledit axe (62) dans le fond de l'encoche (46), entre les deuxièmes pentes (50) (voir figure 5). Dans cette position le levier (41) bloque automatiquement les deux lames (38 et 39) qui stabilisent la poutre de liaison (17) par rapport à la poutre de traction (25) dans la position de travail. Les deux rotors (2 et 3) sont alors disposés suivant une ligne oblique par rapport à la direction d'avancement (A) de sorte que leurs trajectoires se recouvrent partiellement. Les vérins hydrauliques (12 et 29) sont actionnés de telle sorte que la machine s'abaisse jusqu'à ce que les fourches (15) touchent le sol. Les deux rotors (2 et 3) sont entraînés dans le même sens de rotation (F), autour de leurs axes supports (4 et 5), à partir de l'arbre de prise de force du tracteur. Par suite de cette rotation, les galets situés aux extrémités intérieures des bras de fourches (14) se déplacent dans la came qui est logée dans le carter (13) correspondant. Cette came commande les bras (14) de telle sorte que les fourches (15) soient dirigées vers le sol dans la partie avant de leur trajectoire et qu'elles pivotent vers le haut dans la partie latérale dans laquelle elles se déplacent vers l'arrière (vu dans la direction d'avancement (A)). Dans ladite partie avant, les fourches (15) ramassent le fourrage qui se trouve sur le sol. Ensuite, elles le déposent sous la forme d'un andain dans la partie latérale de leur trajectoire, grâce à leur pivotement vers le haut. En raison de la disposition des deux rotors (2 et 3), l'andain formé par le rotor (2) le plus en avant est repris par l'autre rotor (3) qui forme un andain latéral de gros volume.

Dans les virages, par exemple en bout de champ, le tracteur tourne la poutre de traction (25) vers la droite ou vers la gauche. Celui-ci tire ou pousse fortement sur la premier lame coulissante (38). Le levier (41) se soulève alors automatiquement, à l'encontre de la pression des ressorts (56 et 57), par suite du glissement des pentes (49 et 50) de l'encoche (46) sur l'axe (62) du tenon (60). La deuxième lame (39) est ainsi débloquée et permet à la poutre de liaison (17) et au deuxième rotor (3) de se déplacer indépendamment du premier rotor (2) dans le virage. Dès que le tracteur repart en ligne droite, les roues (9 et 10) du deuxième rotor (3) replacent ce dernier dans la position d'andainage, le tenon (60) revenant automatiquement dans l'encoche (46) du levier (41).

Il est également possible de faire pivoter la poutre de liaison (17) et le deuxième rotor (3) vers la droite pour le travail. Pour cela il suffit d'orienter les roues (9 et 10) du deuxième rotor (3) vers le côté droit, lorsqu'elles sont dans la position de transport. Dans ce cas, le deuxième rotor (3) se situe en arrière et à droite du premier rotor (2) durant le travail. Chaque rotor (2 et 3) forme alors son propre andain. Le dispositif de stabilisation (36) et les moyens (37) de blocage et de déblocage automatiques fonctionnent de la même manière que lorsque le deuxième rotor (3) se situe sur le côté gauche.

Pour transposer la machine de la position de travail dans la position de transport, l'opérateur arrête la rotation des rotors (2 et 3) et actionne les vérins hydrauliques (12 et 29) afin qu'ils éloignent leurs fourches (15) du sol. Ensuite, il actionne le vérin hydraulique (21) pour qu'il tourne le manchon (19), l'axe support (5) et les roues porteuses (9 et 10) du deuxième rotor (3) de telle sorte que ces dernières s'orientent dans une direction parallèle à la poutre de liaison (17). Dès que la machine est déplacée dans la direction d'avancement (A), le deuxième rotor (3) et la poutre de liaison (17) pivotent autour de l'axe (4) sensiblement vertical du premier rotor (2) et se placent derrière celui-ci. L'axe (5) sensiblement vertical du deuxième rotor (3) est alors automatiquement bloqué par le verrou (22) pour éviter le retour par inadvertance du deuxième rotor (3) dans la position de travail.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection tel que défini dans les revendications.

## Revendications

1. Machine de fenaison, notamment une andaineuse de végétaux coupés, comportant un bâti (1) portant au moins deux rotors d'andainage (2 et 3) qui sont entraînés en rotation durant le travail autour d'axes sensiblement verticaux (4 et 5) munis de roues porteuses (9 et 10), lequel bâti (1) se compose d'une poutre de traction (25) avec un premier rotor d'andainage (2) et d'une poutre de liaison (17) avec au moins un deuxième rotor d'andainage (3), cette poutre de liaison (17) étant articulée par rapport à la poutre de traction (25) au moyen d'au moins un axe sensiblement vertical (4) autour duquel elle peut être déplacée dans plusieurs positions, ***caractérisée par le fait*** qu'entre la poutre de traction (25) et la poutre de liaison (17) est monté un dispositif de stabilisation (36) avec des moyens (37) de blocage et de déblocage automatiques de la poutre de liaison (17) et du deuxième rotor (3) dans au moins une position de travail.

2. Machine selon la revendication 1, ***caractérisée par le fait*** que le dispositif de stabilisation (36) se compose de deux lames coulissantes (38 et 39) dont la première est reliée à la poutre de traction (25) et la deuxième à la poutre de liaison (17) et qui portent les moyens de blocage et déblocage (37).

3. Machine selon la revendication 2, ***caractérisée par le fait*** que la première lame coulissante (38) comporte un levier (41) qui est articulé sur ladite lame (38) au moyen d'un axe (42), lequel levier (41) comporte une surface plane (45) et une encoche (46).

4. Machine selon la revendication 3, ***caractérisée par le fait*** que la deuxième lame coulissante (39) comporte un tenon (60) qui peut se loger dans l'encoche (46) du levier (41) de la première lame coulissante (38).

5. Machine selon la revendication 4, ***caractérisée par le fait*** que le levier (41) est soumis à la pression d'au moins un ressort (56, 57) de manière à être poussé vers le tenon (60) de la deuxième lame coulissante (39).

6. Machine selon la revendication 3 ou 5, ***caractérisée par le fait*** que la première lame coulissante (38) et le levier (41) comportent des pattes (51 et 52) traversées par tiges (53) qui portent à leurs extrémités des arrêts (54 et 55) et par le fait que des ressorts de pression (56 et 67) sont disposés entre lesdits arrêts (54 et 55) et les pattes (51 et 52).

7. Machine selon la revendication 4 ou 5, ***caractérisée par le fait*** que la deuxième lame coulissante (39) comporte un renfort (64) situé au moins sous le tenon (60).

8. Machine selon la revendication 3 ou 4, ***caractérisée par le fait*** que l'encoche (46) du levier (41) présente deux côtés (47 et 48) inclinés l'un vers l'autre à partir de la surface plane (45) dudit levier (41).

9. Machine selon la revendication 8, ***caractérisée par le fait*** que chaque côté incliné (47 et 48) de l'encoche (46) présente en partant de la surface plane (45) une première pente (49) et une deuxième pente (50).

10. Machine selon la revendication 9, ***caractérisée par le fait*** qu'au niveau des premières pentes (49), les côtés (47 et 48) de l'encoche (46) forment entre eux un angle d'environ 90°.

11. Machine selon la revendication 9 ou 10, ***caractérisée par le fait*** qu'au niveau des deuxièmes pentes (50), les côtés (47 et 48) de l'encoche (46) forment entre eux un angle d'environ 30°.
